# EUROPEAN PATENT SPECIFICATION

(11) **EP 4 581 560 B1**
(45) Date of publication and mention of the grant of the patent: **04.11.2026**
(21) Application number: 23738229.6
(22) Date of filing: 31.05.2023
(51) Int. Cl.: G06T 3/4046, G06T 5/60

(54) **REAL-TIME HIGH-FIDELITY IMAGE RESTORATION USING ITERATIVE LEARNING**
ECHTZEIT-HOCHTREUE-BILDWIEDERHERSTELLUNG MIT ITERATIVEM LERNEN
RESTAURATION D'IMAGES À HAUTE FIDÉLITÉ EN TEMPS RÉEL À L'AIDE DE L'APPRENTISSAGE ITÉRATIF

(30) Priority: 05.10.2022 US 202263413282 P
(43) Date of publication of application: 09.07.2025
(73) Proprietor: GOOGLE LLC, Mountain View CA 94043 (US)
(72) Inventor: HOU, Tingbo, Mountain View, CA 94043 (US); SU, Yu-Chuan, Mountain View, CA 94043 (US); ZHAO, Yang, Mountain View, CA 94043 (US); JIA, Xuhui, Mountain View, CA 94043 (US); GRUNDMANN, Matthias, Mountain View, CA 94043 (US)
(74) Representative: Kennedy, Richard E.
(86) International application number: PCT/US2023/023964
(87) International publication number: WO 2024/076394

(56) References cited:
- US-A1- 2015 030 237
- WANG XINTAO ET AL: "Towards Real-World Blind Face Restoration with Generative Facial Prior", 2021 IEEE/CVF CONFERENCE ON COMPUTER VISION AND PATTERN RECOGNITION (CVPR), IEEE, 20 June 2021 (2021-06-20), pages 9164 - 9174, XP034008285, DOI: 10.1109/CVPR46437.2021.00905
- JONATHAN HO ET AL: "Cascaded Diffusion Models for High Fidelity Image Generation", ARXIV.ORG, CORNELL UNIVERSITY LIBRARY, 201 OLIN LIBRARY CORNELL UNIVERSITY ITHACA, NY 14853, 17 December 2021 (2021-12-17), XP091109286

## Description

### BACKGROUND

It is desirable in many applications to enhance the quality of images, e.g., to correct for image artifacts, low resolution, image noise, poor lighting, over-compression, motion blur, or other unwanted factors or features of an image. It is possible to train a neural network to automatically perform such image enhancement. However, when the models include generative models, such models can 'fill in the blanks' of the image with features that were not actually present in the source image, leading to 'hallucinations' or other unwanted artifacts.

"Towards Real-World Blind Face Restoration with Generative Facial Prior" (X. Wang et al., arXiv:2101.04061, 2021) discloses propose GFP-GAN that leverages rich and diverse priors encapsulated in a pretrained face GAN for blind face restoration. This Generative Facial Prior (GFP) is incorporated into the face restoration process via novel channel-split spatial feature transform layers, which allow the method to achieve a good balance of realness and fidelity.

US 2015/030237 A1 discloses image restoration cascades where digital photographs containing noise are restored using a cascade formed from a plurality of layers of trained machine learning predictors connected in series. For example, noise may be from sensor noise, motion blur, dust, optical low pass filtering, chromatic aberration, compression and quantization artifacts, down sampling or other sources.

"Cascaded Diffusion Models for High Fidelity Image Generation" (J. Ho et al., arXiv:2106.15282) discloses cascaded diffusion models that are capable of generating high fidelity images on the class-conditional ImageNet generation benchmark, without any assistance from auxiliary image classifiers to boost sample quality. A cascaded diffusion model comprises a pipeline of multiple diffusion models that generate images of increasing resolution, beginning with a standard diffusion model at the lowest resolution, followed by one or more super-resolution diffusion models that successively upsample the image and add higher resolution details.

### SUMMARY

An aspect of the present disclosure relates to a method that includes: (i) obtaining a first training dataset that comprises a plurality of high-quality images at a first resolution; (ii) generating, from the first training dataset, a second training dataset that comprises a plurality of degraded images at the first resolution by synthetically degrading the high-quality images of the first dataset; (iii) training a first image enhancement model to predict output images of the first training dataset when presented with corresponding input images from the second training dataset; (iv) applying images of the first training dataset to the trained first image enhancement model to generate a third training dataset that comprises a plurality of enhanced images at the first resolution; (v) generating, from the third training dataset, a fourth training dataset that comprises a plurality of degraded enhanced images at the first resolution by synthetically degrading the enhanced images of the third dataset; (vi) training a second image enhancement model to predict output images of the third training dataset when presented with corresponding input images from the fourth training dataset; and (vii) training a third image enhancement model to predict output images of the third training dataset at a second resolution when presented with corresponding input images from the fourth training dataset that have been downsampled to the second resolution, wherein the second resolution is a lower resolution than the first resolution.

Another aspect of the present disclosure relates to a method that includes applying a first image enhancement model to generate an output enhanced image at a first resolution from a target image at the first resolution. The first image enhancement model has been trained by: (i) obtaining a first training dataset that comprises a plurality of high-quality images at a second resolution, wherein the second resolution is a higher resolution than the first resolution; (ii) generating, from the first training dataset, a second training dataset that comprises a plurality of degraded images at the second resolution by synthetically degrading the high-quality images of the first dataset; (iii) training a second image enhancement model to predict output images of the first training dataset when presented with corresponding input images from the second training dataset; (iv) applying images of the first training dataset to the trained second image enhancement model to generate a third training dataset that comprises a plurality of enhanced images at the second resolution; (v) generating, from the third training dataset, a fourth training dataset that comprises a plurality of degraded enhanced images at the second resolution by synthetically degrading the enhanced images of the third dataset; (vi) training a third image enhancement model to predict output images of the third training dataset when presented with corresponding input images from the fourth training dataset; (vii) training a fourth image enhancement model to predict output images of the third training dataset at the first resolution when presented with corresponding input images from the fourth training dataset that have been downsampled to the first resolution; (viii) obtaining a fifth training dataset that comprises a plurality of images at the first resolution; (ix) generating, from the fifth training dataset, a sixth training dataset that comprises a plurality of enhanced images at the first resolution by, for a given image of the fifth training dataset: (a) generating an output enhanced image at the first resolution from the given image of the fifth training dataset by applying the given image to the fourth image enhancement model to generate a first intermediate image at the first resolution, (b) upsampling the first intermediate image to the second resolution, (c) applying the upsampled first intermediate image to the third image enhancement model to generate a second intermediate image at the second resolution, and (d) downsampling the second intermediate image to the first resolution to generate an enhanced image of the sixth training dataset that corresponds to the given image of the fifth training dataset; and (x) training the first image enhancement model to predict output images of the sixth training dataset when presented with corresponding input images from the fifth training dataset.

Another aspect of the present disclosure relates to a method that includes: (i) obtaining a first image enhancement model, the first image enhancement model having been trained using high-quality images; (ii) obtaining a first training dataset that comprises a plurality of low-quality images; (iii) generating, from the first training dataset, a second training dataset that comprises a plurality of enhanced versions of images of the first training dataset by, for a given image of the first training dataset, applying the given image of the first training dataset to the first image enhancement model to generate an enhanced image of the second training dataset that corresponds to the given image of the first training dataset; and (iv) training a second image enhancement model to predict output images of the second training dataset when presented with corresponding input images from the first training dataset.

Another aspect of the present disclosure relates to a method that includes applying a first image enhancement model to generate an output enhanced image from a target image. The first image enhancement model has been trained by: (i) obtaining a second image enhancement model, the second image enhancement model having been trained using high-quality images; (ii) obtaining a first training dataset that comprises a plurality of low-quality images; (iii) generating, from the first training dataset, a second training dataset that comprises a plurality of enhanced versions of images of the first training dataset by, for a given image of the first training dataset, applying the given image of the first training dataset to the second image enhancement model to generate an enhanced image of the second training dataset that corresponds to the given image of the first training dataset; and (iv) training the first image enhancement model to predict output images of the second training dataset when presented with corresponding input images from the first training dataset.

Another aspect of the present disclosure relates to an article of manufacture including a computer-readable medium, having stored thereon program instructions that, upon execution by a computing device, cause the computing device to perform operations to effect the method of any of the above aspects.

It will be appreciated that features described in the context of the first aspect can be implemented in the context of the second aspect. These as well as other aspects, advantages, and alternatives will become apparent to those of ordinary skill in the art by reading the following detailed description with reference where appropriate to the accompanying drawings. Further, it should be understood that the description provided in this summary section and elsewhere in this document is intended to illustrate the claimed subject matter by way of example and not by way of limitation.

### BRIEF DESCRIPTION OF THE FIGURES

Figure 1A illustrates aspects of an example method.
Figure 1B illustrates aspects of an example method.
Figure 1C illustrates aspects of an example method.
Figure 1D illustrates aspects of an example method.
Figure 1E illustrates aspects of an example method.
Figure 2A illustrates aspects of an example method.
Figure 2B illustrates aspects of an example method.
Figure 2C illustrates aspects of an example method.
Figure 2D illustrates aspects of an example method.
Figure 3 illustrates experimental results.
Figure 4 is a simplified block diagram showing some of the components of an example system.
Figure 5 is a flowchart of a method, according to an example embodiment.
Figure 6 is a flowchart of a method, according to an example embodiment.
Figure 7 is a flowchart of a method, according to an example embodiment.
Figure 8 is a flowchart of a method, according to an example embodiment.

### DETAILED DESCRIPTION

Examples of methods and systems are described herein. It should be understood that the words "exemplary," "example," and "illustrative," are used herein to mean "serving as an example, instance, or illustration." Any embodiment or feature described herein as "exemplary," "example," or "illustrative," is not necessarily to be construed as preferred or advantageous over other embodiments or features. Further, the exemplary embodiments described herein are not meant to be limiting. It will be readily understood that certain aspects of the disclosed systems and methods can be arranged and combined in a wide variety of different configurations.

It should be understood that the below embodiments, and other embodiments described herein, are provided for explanatory purposes, and are not intended to be limiting.

### I. Overview

It is desirable in many applications to enhance the quality of images, e.g., to correct for image artifacts, low resolution, image noise, poor lighting, over-compression, motion blur, or other unwanted factors or features of an image. However, it can be difficult to train an artificial neural network to perform such image enhancement. For example, a generative model could be trained, based on a large amount of 'natural' images to enhance novel input images. However, such models can 'fill in the blanks' of the image with content that was present in their training datasets but that was not actually present in the source image, leading to 'hallucinations' or other unwanted artifacts. Alternatively, pairs of images (one enhanced and one non-enhanced, that represent the same image content) could be used to train an image enhancement model. However, it is difficult to obtain sufficiently high-quality image pairs to train a model in that manner.

The model training and image enhancement methods and models described herein overcome these limitations by generating the models in an iterative, multi-stage manner. Each stage includes the training of a model and/or the generation of a training dataset that is then used to train a model and/or generate another training dataset in the subsequent stage.

The training methods described herein begin with a training dataset that includes a plurality of high-quality images and a corresponding set of degraded images generated therefrom, via a process of synthetic degradation. These high-quality images are then used to generate 'enhanced' high quality images that are of a sufficiently high quality that they can be used to train second-stage image enhancement models. Images of a quality similar to the 'enhanced' high quality images are in practice difficult to obtain, so this first stage (training a model to generate the 'enhanced' high quality images) provides for improved training of the second-stage models. The first stage includes training a first model to generate the original high-quality images from their degraded versions. The first model, which has now been trained to enhance input images, is then applied to a set of high-quality images (e.g., the same images used to train the first model) to generate 'enhanced' high quality images. The set of 'enhanced' high quality images are then synthetically degraded to generate the training dataset used to train the second-stage models.

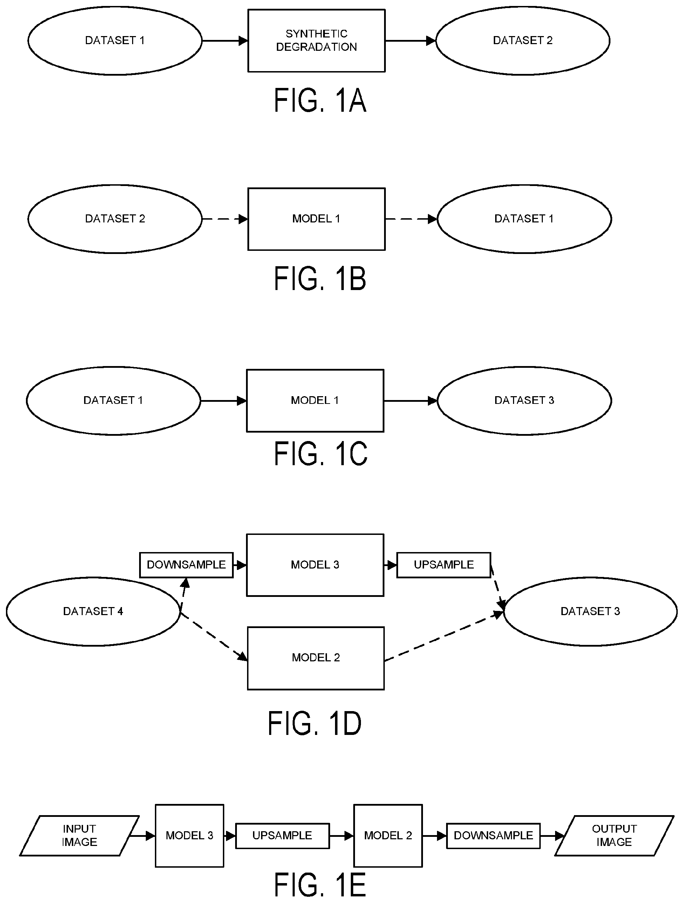

Figures 1A-C depict aspects of such a first-stage process for 'bootstrapping' ultra-high-quality images from high quality images, for use in training the second-stage models. Figure 1A depicts the generation, from a first dataset ("DATASET 1") that comprises high-quality images, of a second dataset ("DATASET 2") by synthetically degrading the images of the first dataset ("SYNTEHTIC DEGRADATION"). Figure 1B depicts the use of pairs of images (i.e., of images from the first dataset and the images of the second dataset generated by synthetically degrading the images from the first dataset) to train a first image enhancement model ("MODEL 1") to predict the original high-quality images from synthetically degraded versions thereof. The set of high quality images of the first dataset could include images professionally generated, using professional-quality cameras, under high-quality lighting, etc. and/or that have been selected for having a high quality (e.g., via manual selection, via use of an automated method for determining image quality) from a set of low and high quality images.

Once the first image enhancement model has been trained, it is used to generate, from the first dataset (e.g., from the same images used to train to generate the first model and/or images of the first dataset that were not used in training the first model), a third dataset of enhanced images ("DATASET 3"). Images of this third dataset are of especially high quality, and so can be used to train further image enhancement models to have higher quality than if the non-enhanced high-quailty images of the first dataset

Once this first image enhancement model has been trained and used to generate a dataset of enhanced high-quality images, the set of high-quality images can then be used to train second-stage image enhancement models. This includes generating, from the third dataset of enhanced high-quality images, a fourth dataset ("DATASET 4") by synthetically degrading the images of the third dataset. The paired third and fourth datasets are then used to train two different image enhancement models ("MODEL 2" and "MODEL 3"), at respective different image re solutions, to predict the images of the third dataset from their corresponding degraded versions of the fourth dataset. The models are trained at two different resolutions (one higher, at the 'native' resolution of the third and fourth datasets, and one at a lower resolution) so that they can be used serially at inference time to enhance novel images at respective different resolutions and image feature scales.

Figure 1D depicts the use of pairs of images (i.e., of images from the third dataset and the images of the fourth dataset generated by synthetically degrading the images from the fourth dataset) to train the second image enhancement model ("MODEL 2") and the third image enhancement model ("MODEL 3") at respective different resolutions (e.g., edges, textures). This includes, for the third model, applying a downsampled version of an image of the fourth dataset as an input to the third model and then upsampling the output therefrom to compare to the corresponding image of the third dataset (e.g., to generate a loss function that can be used to update or otherwise train the parameters of the third model).

Synthetic degradation of images (e.g., of the images of the first dataset to generate the second dataset, or of the images of the third dataset to generate the fourth dataset) could include a variety of processes to synthetically introduce noise, blur, motion, or other artifacts to degrade the input images. For example, synthetic degradation of images could include at least one of adding Gaussian noise, adding camera noise, adding Gaussian blur, adding motion blur, down-sampling, and/or adding encoding artifacts.

Finally, the trained second and third models can be applied, serially, to enhance images at the lower resolution of the third model. Fig. 1E depicts such an inference process, wherein an input image ("INPUT IMAGE") at the second, lower resolution is applied to the third image enhancement model to generate an output at the second resolution. This output is upsampled ("UPSAMPLE") to the first, higher resolution and then applied to the second image enhancement model to generate an output at the first resolution. This output is then downsampled ("DOWNSAMPLE") to the second resolution to generate an output image ("OUTPUT IMAGE") that is an enhanced version of the input image.

The higher and lower resolutions of the first and second image enhancement models and the third image enhancement model, respectively, could be a variety of different resolutions, according to an application. The lower resolution could be selected to comport with the desired resolution of images to be enhanced using the trained models. For example, the lower image resolution could be 512x512 and the higher image resolution could be 1024x1024.

Further, since the resolution of the first image enhancement model and the second image enhancement model are the same, the third image enhancement model could optionally be trained by starting with the first image enhancement model and continuing the training thereof using the third and fourth training datasets.

The execution of multiple models, which may require significant computational resources (e.g., memory, compute cycles, number of cores), may make execution of the serial image enhancement scheme described herein (e.g., in connection with Fig. 1E) difficult in certain contexts (e.g., smartphones or other limited-resource contexts) and/or within certain constraints (e.g., a latency constraint in order to perform image enhancement in near-real-time for frames of a video call or other video stream). In some examples, this limitation could be addressed by selecting a portion of particular interest within an image (e.g., a face), extracting that portion of the image, and then performing image enhancement only on the extracted portion. For example, image enhancement could be performed only on face(s) detected within images (e.g., within frames of a video call). This can allow the resolution of the trained models to be reduced (e.g., to comport with the expected size of a face or other feature of interest within the frame of a larger image), thereby reducing the computational cost to enhance the face or other portion of interest within the larger image.

Additionally or alternatively, the computational cost of enhancing an image could be reduced by using the trained second-stage models (the second and third image enhancement models), or some other teacher model(s), to train a simpler model to perform image enhancement. This has the benefit that the more complex models, having more degrees of freedom, can more easily explore the space of the 'image enhancement" problem, and thus result in higher accuracy based on fewer, higher-quality training examples. These more complex models can then be used to generate relatively larger training datasets, using relatively lower-quality training data, that can be used to achieve greater accuracy in relatively less complex models that exhibit decreased computational cost to execute (e.g., less memory, fewer compute cycles, fewer cores). Such lower-quality images could be generated using poorer cameras (e.g., front-facing cameras of smart phones), under poorer light conditions, with lower resolution, exhibiting more motion, blur, compression, or other artifacts, or otherwise have a lower quality that the images used to train the teacher model(s) (e.g., using the training methods described above.

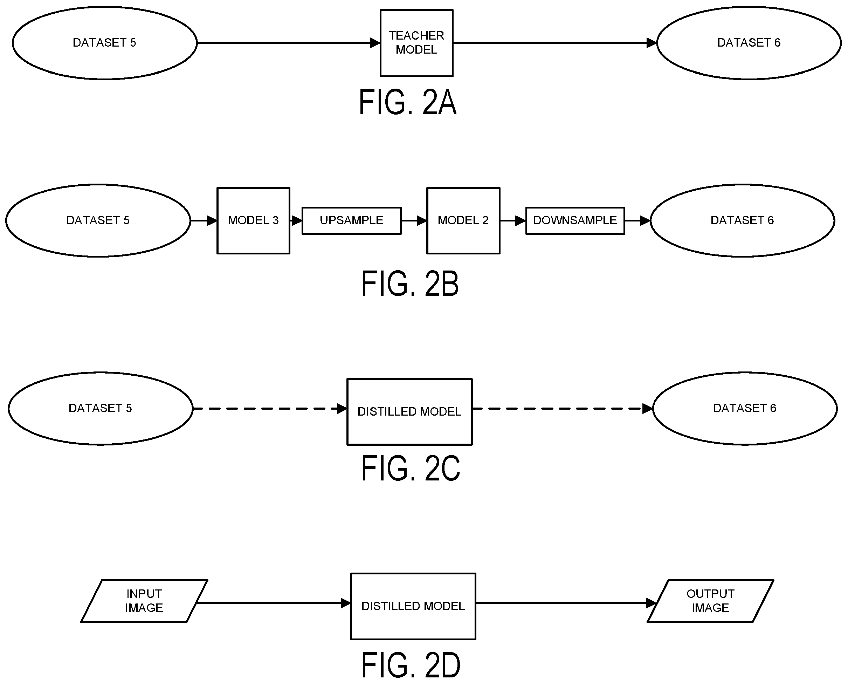

Fig. 2A illustrates an examples of a teacher model ("TEACHER MODEL"), which has been trained on high-quality images, generating, from a fifth dataset ("DATASET 5") that includes low-quality images, a sixth dataset ("DATASET 6") that contains enhanced versions of the images of the fifth dataset. The teacher model could include a set of models as described above. For example, as shown in Fig. 2B, images of the sixth dataset could be generated by applying images of the fifth dataset to the third image enhancement model, upsampling the low-resolution enhanced images output from the third model, applying the upsampled images to the second image enhancement model to generate high-resolution enhanced output images, and then downsampling those high-resolution enhanced images.

Finally, as depicted in Fig. 2C, the fifth and sixth datasets are used to train a distilled model ("DISTILLED MODEL") to generate the enhanced images of the sixth dataset from the low-quality, non-enhanced images of the fifth dataset. This distilled model can then be used, as shown in Fig. 2D, to receive input images ("INPUT IMAGE") as input and to output enhanced versions thereof as output ("OUTPUT IMAGE"). Such a distilled model could include the MobileNet architecture or some other relatively lightweight image processing model architecture that has been adapted to use on computationally limited systems, e.g., smart phones.

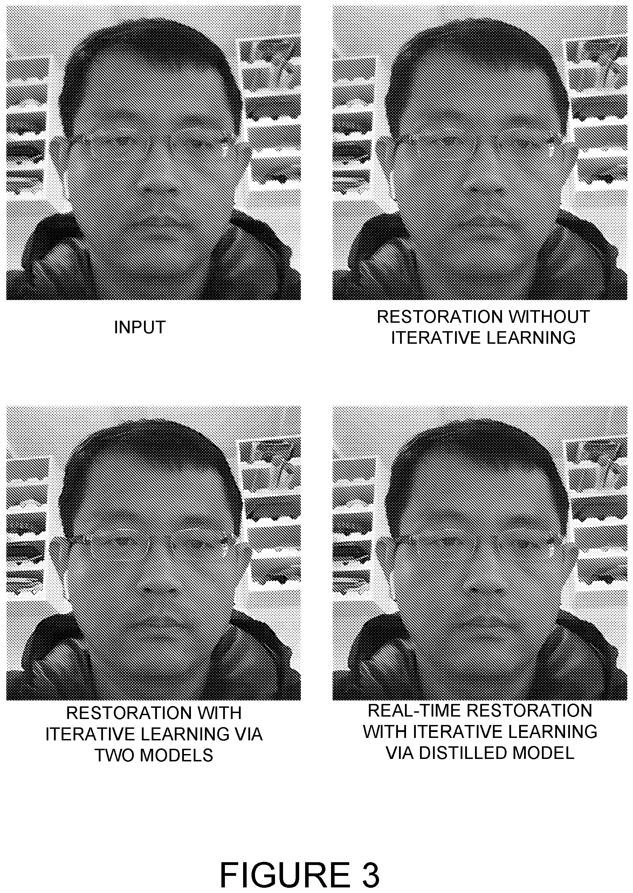

Figure 3 illustrates an example of a low-quality input image (top left, e.g., from the fifth dataset of Figures 2A-C) and an enhanced version thereof generated via methods other than those described herein (top right, e.g., by only training a single image enhancement model once based on a single set of input training images and degraded versions thereof). Figure 3 also shows an enhanced image generated via the application in series of the higher and lower resolution image enhancement models to the input image (bottom left, e.g., using the second and third image enhancement models). Figure 3 also depicts (bottom right) an image generated by a lightweight distilled model trained, as described above, using training datasets generated using the trained higher and lower resolution image enhancement models applied in series to low-quality training images.

The computational cost of executing the distilled model to generate 512x512 images was assessed on a variety of different hardware. The model took 20.0 ms to execute using the GPU of the Pixel 6 smart phone, 17.9 ms to execute using the NPU of the Pixel 6 smart phone, 5.1 ms to execute using the NPU of the Pixel 7 smart phone, and 5.5 ms to execute within the WebGL environment on a MacBook Pro M1.

As noted above, such a distillation process can result in a distilled image enhancement model that exhibits similar benefits with respect to image enhancement as the teacher model(s) (e.g., as the series application of the second and third image enhancement models) while requiring reduced computational costs or resources to execute. This could enable image enhancement to be performed on resource-limited systems, e.g., by smart phones, and/or at lower latency (e.g., at real-time or near-real-time, enabling the enhancement of frames of a video stream as they are generated and/or received). So, in some applications, a server, cloud computing system, or other large computational system could operate to generate a relatively lightweight distilled model (e.g., using the iterative, multi-stage training methods described herein) using one or more sets of training images (e.g., a set of high-quality images and a set of low-quality images). Such a large computational system could then transmit the lightweight distilled model to one or more remote systems (e.g., smart phones), e.g., via a wired or wireless connection. Additionally or alternatively, the lightweight distilled model could be added to the remote system via some other method, e.g., using physical storage media, by programming the model into the remote system when the remote system is fabricated/initially programmed, etc.

### II. Example Systems

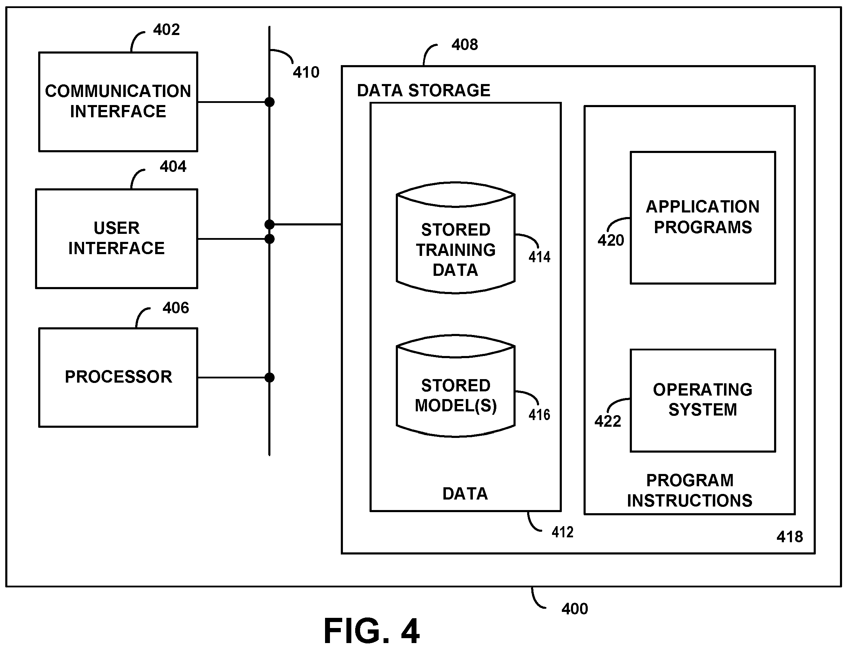

Figure 4 illustrates an example system 400 that may be used to implement the methods described herein. By way of example and without limitation, system 400 may be or include a computer (such as a desktop, notebook, tablet, or handheld computer, a server), elements of a cloud computing system, a smartphone, or some other type of device or system. It should be understood that elements of system 400 may represent a physical instrument and/or computing device such as a server, a particular physical hardware platform on which applications operate in software, or other combinations of hardware and software that are configured to carry out functions as described herein.

As shown in Figure 4, system 400 may include a communication interface 402, a user interface 404, one or more processor(s) 406, and data storage 408, all of which may be communicatively linked together by a system bus, network, or other connection mechanism 410.

Communication interface 402 may function to allow system 400 to communicate, using analog or digital modulation of electric, magnetic, electromagnetic, optical, or other signals, with other devices, access networks, and/or transport networks. Thus, communication interface 402 may facilitate circuit-switched and/or packet-switched communication, such as plain old telephone service (POTS) communication and/or Internet protocol (IP) or other packetized communication. For instance, communication interface 402 may include a chipset and antenna arranged for wireless communication with a radio access network or an access point. Also, communication interface 402 may take the form of or include a wireline interface, such as an Ethernet, Universal Serial Bus (USB), or High-Definition Multimedia Interface (HDMI) port. Communication interface 402 may also take the form of or include a wireless interface, such as a Wifi, BLUETOOTH^{®}, global positioning system (GPS), or wide-area wireless interface (e.g., 3GPP Long-Term Evolution (LTE), or 3GPP 5G). However, other forms of physical layer interfaces and other types of standard or proprietary communication protocols may be used over communication interface 402. Furthermore, communication interface 402 may comprise multiple physical communication interfaces (e.g., a Wifi interface, a BLUETOOTH^{®} interface, and a wide-area wireless interface).

In some embodiments, communication interface 402 may function to allow system 400 to communicate, with other devices, remote servers, access networks, and/or transport networks. For example, the communication interface 402 may function to communicate with one or more requestor devices (e.g., smartphone) to receive images, to apply the methods described herein to enhance the improved images, and to transmit the enhanced images back to the requestor device(s). Additionally or alternatively, the communication interface 402 may function to communicate with one or more remote devices (e.g., smartphones) to transmit indications of models generated by the system 400 using the methods described herein.

User interface 404 may function to allow system 400 to interact with a user, for example to receive input from and/or to provide output to the user. Thus, user interface 404 may include input components such as a keypad, keyboard, touch-sensitive or presence-sensitive panel, computer mouse, trackball, joystick, microphone, and so on. User interface 404 may also include one or more output components such as a display screen which, for example, may be combined with a presence-sensitive panel. The display screen may be based on CRT, LCD, and/or LED technologies, or other technologies now known or later developed. User interface 404 may also be configured to generate audible output(s), via a speaker, speaker jack, audio output port, audio output device, earphones, and/or other similar devices.

Processor(s) 406 may comprise one or more general purpose processors - e.g., microprocessors - and/or one or more special purpose processors - e.g., digital signal processors (DSPs), graphics processing units (GPUs), floating point units (FPUs), network processors, tensor processing units (TPUs), or application-specific integrated circuits (ASICs). In some instances, special purpose processors may be capable of model execution (e.g., execution of artificial neural networks or other machine learning models), training of models, generation of training datasets for the training ofmodels, or other functions as described herein, among other applications or functions. Data storage 408 may include one or more volatile and/or non-volatile storage components, such as magnetic, optical, flash, or organic storage, and may be integrated in whole or in part with processor(s) 406. Data storage 408 may include removable and/or non-removable components.

Processor(s) 406 may be capable of executing program instructions 418 (e.g., compiled or non-compiled program logic and/or machine code) stored in data storage 408 to carry out the various functions described herein. Therefore, data storage 408 may include a non-transitory computer-readable medium, having stored thereon program instructions that, upon execution by system 400, cause system 400 to carry out any of the methods, processes, or functions disclosed in this specification and/or the accompanying drawings. The execution of program instructions 418 by processor(s) 406 may result in processor 406 using data 412.

By way of example, program instructions 418 may include an operating system 422 (e.g., an operating system kernel, device driver(s), and/or other modules) and one or more application programs 420 (e.g., functions for executing the methods described herein) installed on system 400. Data 412 may include stored training data 414 (e.g., high-quality images, low-quality images, enhanced images, sets of pairs of images). Data 412 may also include stored models 416 (e.g., stored model parameters and other model-defining information) that can be executed as part of the methods described herein (e.g., to determine, from an input image, an enhanced version of the input image).

Application programs 420 may communicate with operating system 422 through one or more application programming interfaces (APIs). These APIs may facilitate, for instance, application programs 420 transmitting or receiving information via communication interface 402, receiving and/or displaying information on user interface 404, and so on.

Application programs 420 may take the form of "apps" that could be downloadable to system 400 through one or more online application stores or application markets (via, e.g., the communication interface 402). However, application programs can also be installed on system 400 in other ways, such as via a web browser or through a physical interface (e.g., a USB port) of the system 400.

### III. Example Methods

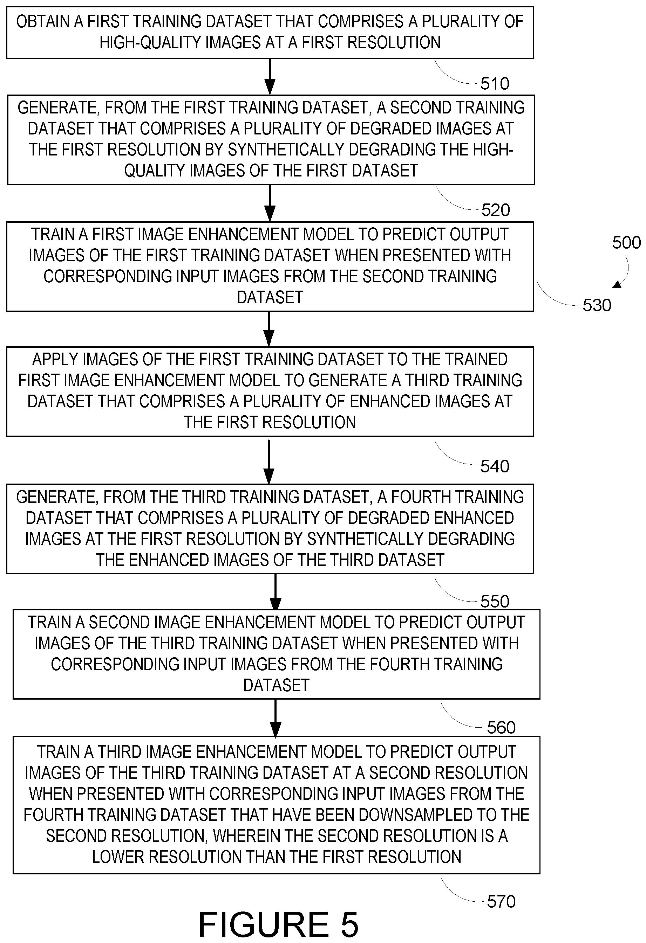

Figure 5 is a flowchart of a method 500 for generating image enhancement models as described herein. The method 500 includes obtaining a first training dataset that comprises a plurality of high-quality images at a first resolution (510). The method 500 additionally includes generating, from the first training dataset, a second training dataset that comprises a plurality of degraded images at the first resolution by synthetically degrading the high-quality images of the first dataset (520). The method 500 yet further includes training a first image enhancement model to predict output images of the first training dataset when presented with corresponding input images from the second training dataset (530). The method 500 additionally includes applying images of the first training dataset to the trained first image enhancement model to generate a third training dataset that comprises a plurality of enhanced images at the first resolution (540). The method 500 further includes generating, from the third training dataset, a fourth training dataset that comprises a plurality of degraded enhanced images at the first resolution by synthetically degrading the enhanced images of the third dataset (550). The method 500 additionally includes training a second image enhancement model to predict output images of the third training dataset when presented with corresponding input images from the fourth training dataset (560). The method 500 also includes training a third image enhancement model to predict output images of the third training dataset at a second resolution when presented with corresponding input images from the fourth training dataset that have been downsampled to the second resolution, wherein the second resolution is a lower resolution than the first resolution (570).

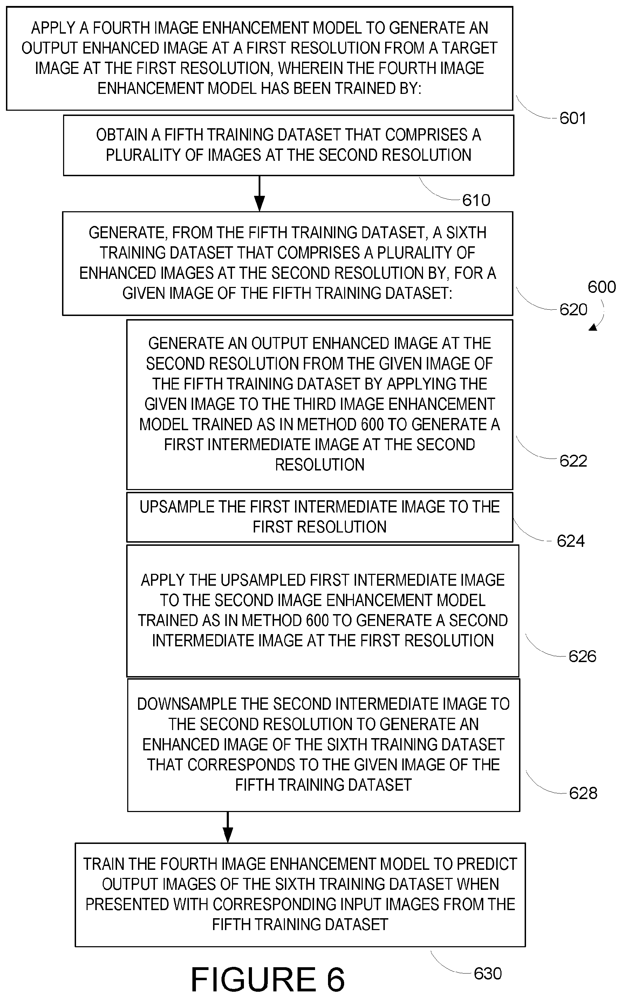

Figure 6 is a flowchart of a method 600 for enhancing an image using an image enhancement model as describe herein. The method 600 includes applying a fourth image enhancement model to generate an output enhanced image at the second resolution from a target image at the second resolution (601). The fourth image enhancement model has been trained by:
obtaining a fifth training dataset that comprises a plurality of images at the second resolution (610);
generating, from the fifth training dataset, a sixth training dataset that comprises a plurality of enhanced images at the first resolution (620). this includes, for a given image of the fifth training dataset: generating an output enhanced image at the second resolution from the given image of the fifth training dataset by applying the given image to the third image enhancement model trained as in method 600 to generate a first intermediate image at the second resolution (622); upsampling the first intermediate image to the first resolution (624); applying the upsampled first intermediate image to the second image enhancement model trained as in method 600 to generate a second intermediate image at the first resolution (626); and downsampling the second intermediate image to the second resolution to generate an enhanced image of the sixth training dataset that corresponds to the given image of the fifth training dataset (628); and
training the fourth image enhancement model to predict output images of the sixth training dataset when presented with corresponding input images from the fifth training dataset (630).

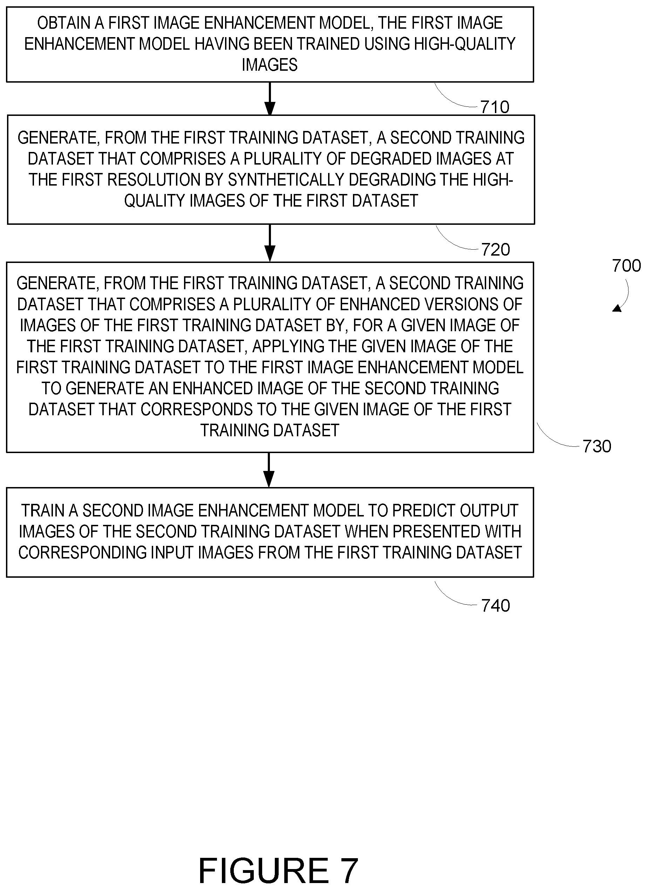

Figure 7 is a flowchart of a method 600 for generating image enhancement models as described herein. The method 700 includes obtaining a first image enhancement model, the first image enhancement model having been trained using high-quality images (710). The method 700 additionally includes obtaining a first training dataset that comprises a plurality of low-quality images (720). the method 700 yet further includes generating, from the first training dataset, a second training dataset that comprises a plurality of enhanced versions of images of the first training dataset by, for a given image of the first training dataset, applying the given image of the first training dataset to the first image enhancement model to generate an enhanced image of the second training dataset that corresponds to the given image of the first training dataset (730). The method 700 also includes training a second image enhancement model to predict output images of the second training dataset when presented with corresponding input images from the first training dataset (740).

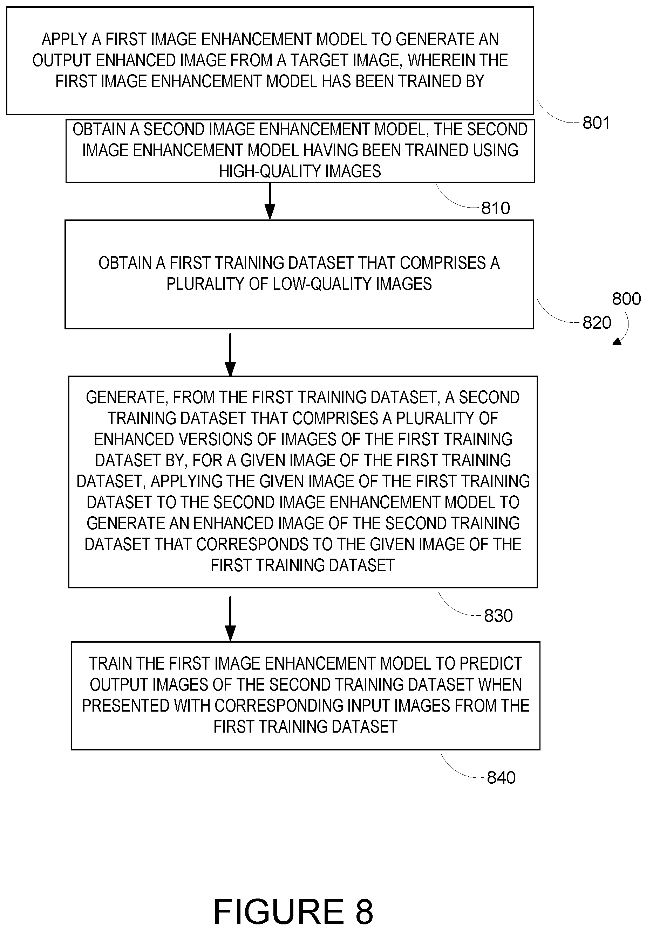

Figure 8 is a flowchart of a method 800 for enhancing an image using an image enhancement model as described herein. The method 800 includes applying a first image enhancement model to generate an output enhanced image from a target image (801). the first image enhancement model has been trained by:
obtaining a second image enhancement model, the second image enhancement model having been trained using high-quality images (810);
obtaining a first training dataset that comprises a plurality of low-quality images (820);
generating, from the first training dataset, a second training dataset that comprises a plurality of enhanced versions of images of the first training dataset by, for a given image of the first training dataset, applying the given image of the first training dataset to the second image enhancement model to generate an enhanced image of the second training dataset that corresponds to the given image of the first training dataset (830); and
training the first image enhancement model to predict output images of the second training dataset when presented with corresponding input images from the first training dataset (840).

Any or all of the methods 500, 600, 700, 800 could include additional elements or features.

### IV. Conclusion

The above detailed description describes various features and functions of the disclosed systems, devices, and methods with reference to the accompanying figures. In the figures, similar symbols typically identify similar components, unless context indicates otherwise. The illustrative embodiments described in the detailed description, figures, and claims are not meant to be limiting. Other embodiments can be utilized, and other changes can be made, without departing from the scope of the subject matter presented herein. It will be readily understood that the aspects of the present disclosure, as generally described herein, and illustrated in the figures, can be arranged, substituted, combined, separated, and designed in a wide variety of different configurations, all of which are explicitly contemplated herein.

With respect to any or all of the message flow diagrams, scenarios, and flowcharts in the figures and as discussed herein, each step, block and/or communication may represent a processing of information and/or a transmission of information in accordance with example embodiments. Alternative embodiments are included within the scope of these example embodiments. In these alternative embodiments, for example, functions described as steps, blocks, transmissions, communications, requests, responses, and/or messages may be executed out of order from that shown or discussed, including in substantially concurrent or in reverse order, depending on the functionality involved. Further, more or fewer steps, blocks and/or functions may be used with any of the message flow diagrams, scenarios, and flow charts discussed herein, and these message flow diagrams, scenarios, and flow charts may be combined with one another, in part or in whole.

A step or block that represents a processing of information may correspond to circuitry that can be configured to perform the specific logical functions of a herein-described method or technique. Alternatively or additionally, a step or block that represents a processing of information may correspond to a module, a segment, or a portion of program code (including related data). The program code may include one or more instructions executable by a processor for implementing specific logical functions or actions in the method or technique. The program code and/or related data may be stored on any type of computer-readable medium, such as a storage device, including a disk drive, a hard drive, or other storage media.

The computer-readable medium may also include non-transitory computer-readable media such as computer-readable media that stores data for short periods of time like register memory, processor cache, and/or random access memory (RAM). The computer-readable media may also include non-transitory computer-readable media that stores program code and/or data for longer periods of time, such as secondary or persistent long term storage, like read only memory (ROM), optical or magnetic disks, and/or compact-disc read only memory (CD-ROM), for example. The computer-readable media may also be any other volatile or non-volatile storage systems. A computer-readable medium may be considered a computer-readable storage medium, for example, or a tangible storage device.

Moreover, a step or block that represents one or more information transmissions may correspond to information transmissions between software and/or hardware modules in the same physical device. However, other information transmissions may be between software modules and/or hardware modules in different physical devices.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A computer-implemented method comprising:
obtaining (510) a first training dataset that comprises a plurality of high-quality images at a first resolution;
generating (520), from the first training dataset, a second training dataset that comprises a plurality of degraded images at the first resolution by synthetically degrading the high-quality images of the first dataset;
training (530) a first image enhancement model to predict output images of the first training dataset when presented with corresponding input images from the second training dataset;
applying (540) images of the first training dataset to the trained first image enhancement model to generate a third training dataset that comprises a plurality of enhanced images at the first resolution;
generating (550), from the third training dataset, a fourth training dataset that comprises a plurality of degraded enhanced images at the first resolution by synthetically degrading the enhanced images of the third dataset;
training (560) a second image enhancement model to predict output images of the third training dataset when presented with corresponding input images from the fourth training dataset; and
training (570) a third image enhancement model to predict output images of the third training dataset at a second resolution when presented with corresponding input images from the fourth training dataset that have been downsampled to the second resolution, wherein the second resolution is a lower resolution than the first resolution.

2. The method of claim 1, further comprising:
generating an output enhanced image at the second resolution from a target image at the second resolution by applying the target image to the third image enhancement model to generate a first intermediate image at the second resolution, upsampling the first intermediate image to the first resolution, applying the upsampled first intermediate image to the second image enhancement model to generate a second intermediate image at the first resolution, and downsampling the second intermediate image to the second resolution.

3. The method of claim 1, further comprising:
obtaining (610) a fifth training dataset that comprises a plurality of images at the second resolution;
generating (620) , from the fifth training dataset, a sixth training dataset that comprises a plurality of enhanced images at the second resolution by, for a given image of the fifth training dataset:
generating (622) an output enhanced image at the second resolution from the given image of the fifth training dataset by applying the given image to the third image enhancement model to generate a first intermediate image at the second resolution,
upsampling (624) the first intermediate image to the first resolution,
applying (626) the upsampled first intermediate image to the second image enhancement model to generate a second intermediate image at the first resolution, and
downsampling (628) the second intermediate image to the second resolution to generate an enhanced image of the sixth training dataset that corresponds to the given image of the fifth training dataset; and
training (630) a fourth image enhancement model to predict output images of the sixth training dataset when presented with corresponding input images from the fifth training dataset.

4. The method of claim 3, wherein a model architecture of the fourth image enhancement model is the MobileNet architecture.

5. The method of claim 3, wherein the fifth training dataset comprises a plurality of low-quality images at the second resolution.

6. The method of any of claims 3 to 5, further comprising:
generating an output enhanced image at the second resolution from a target image at the second resolution by applying the target image to the fourth image enhancement model.

7. The method of claim 6, further comprising:
transmitting the fourth image enhancement model from a server to a remote system, wherein generating the output enhanced image from the target image is performed by at least one processor of the remote system.

8. The method of claim 6, further comprising:
obtaining a source image;
determining a location of a face within the source image; and
extracting a portion of the source image corresponding to the determined location of the face within the source image, wherein the target image is the extracted portion of the source image.

9. The method of claim 8, wherein obtaining the source image comprises obtaining a video stream, wherein the source image is a frame of the video stream.

10. The method of claim 9, wherein obtaining the video stream, obtaining the source image, determining the location of the face within the source image, extracting the portion of the source image, and generating the output enhanced image from the target image by applying the target image to the fourth image enhancement model are performed by at least one processor of a smartphone.

11. The method of any preceding claim, wherein the first resolution is 1024x1024, and wherein the second resolution is 512x512.

12. The method of any of claims 1-11, wherein synthetically degrading the high-quality images of the first dataset comprises at least one of adding Gaussian noise, adding camera noise, adding Gaussian blur, adding motion blur, down-sampling, and adding encoding artifacts.

13. A method comprising:
applying a first image enhancement model to generate an output enhanced image at a first resolution from a target image at the first resolution, wherein the first image enhancement model has been trained using the method of any preceding claim.

14. A system comprising one or more processors (406) and a memory (408), the memory storing computer-readable instructions that, when executed by the one or more processors, cause the system to perform a method according to any preceding claim.

15. A computer program product comprising computer-readable instructions that, when executed by a computer, cause the computer to perform a method according to any of claims 1 to 13.

## Patentansprüche

1. Computerimplementiertes Verfahren, umfassend:
Erhalten (510) eines ersten Trainingsdatensatzes, der eine Mehrzahl von hochqualitativen Bildern bei einer ersten Auflösung umfasst;
Erzeugen (520), aus dem ersten Trainingsdatensatz, eines zweiten Trainingsdatensatzes, der eine Mehrzahl von degradierten Bildern bei der ersten Auflösung umfasst, durch synthetisches Degradieren der hochqualitativen Bilder des ersten Datensatzes;
Trainieren (530) eines ersten Bildverbesserungsmodells zum Vorhersagen von Ausgabebildern des ersten Trainingsdatensatzes, wenn entsprechende Eingabebilder aus dem zweiten Trainingsdatensatz präsentiert werden;
Anwenden (540) von Bildern des ersten Trainingsdatensatzes auf das trainierte erste Bildverbesserungsmodell zum Erzeugen eines dritten Trainingsdatensatzes, der eine Mehrzahl von verbesserten Bildern bei der ersten Auflösung umfasst;
Erzeugen (550), aus dem dritten Trainingsdatensatz, eines vierten Trainingsdatensatzes, der eine Mehrzahl von degradierten verbesserten Bildern bei der ersten Auflösung umfasst, durch synthetisches Degradieren der verbesserten Bilder des dritten Datensatzes;
Trainieren (560) eines zweiten Bildverbesserungsmodells zum Vorhersagen von Ausgabebildern des dritten Trainingsdatensatzes, wenn entsprechende Eingabebilder aus dem vierten Trainingsdatensatz präsentiert werden; und
Trainieren (570) eines dritten Bildverbesserungsmodells zum Vorhersagen von Ausgabebildern des dritten Trainingsdatensatzes bei einer zweiten Auflösung, wenn entsprechende Eingabebilder aus dem vierten Trainingsdatensatz präsentiert werden, die auf die zweite Auflösung heruntergetastet worden sind, wobei die zweite Auflösung eine niedrigere Auflösung als die erste Auflösung ist.

2. Verfahren nach Anspruch 1, ferner umfassend:
Erzeugen eines verbesserten Ausgabebildes bei der zweiten Auflösung aus einem Zielbild bei der zweiten Auflösung durch Anwenden des Zielbildes auf das dritte Bildverbesserungsmodell zum Erzeugen eines ersten Zwischenbildes bei der zweiten Auflösung, Hochtasten des ersten Zwischenbildes auf die erste Auflösung, Anwenden des hochgetasteten ersten Zwischenbildes auf das zweite Bildverbesserungsmodell zum Erzeugen eines zweiten Zwischenbildes bei der ersten Auflösung und Heruntertasten des zweiten Zwischenbildes auf die zweite Auflösung.

3. Verfahren nach Anspruch 1, ferner umfassend:
Erhalten (610) eines fünften Trainingsdatensatzes, der eine Mehrzahl von Bildern bei der zweiten Auflösung umfasst;
Erzeugen (620), aus dem fünften Trainingsdatensatz, eines sechsten Trainingsdatensatzes, der eine Mehrzahl von verbesserten Bildern bei der zweiten Auflösung umfasst, durch, für ein gegebenes Bild des fünften Trainingsdatensatzes:
Erzeugen (622) eines verbesserten Ausgabebildes bei der zweiten Auflösung aus dem gegebenen Bild des fünften Trainingsdatensatzes durch Anwenden des gegebenen Bildes auf das dritte Bildverbesserungsmodell zum Erzeugen eines ersten Zwischenbildes bei der zweiten Auflösung,
Hochtasten (624) des ersten Zwischenbildes auf die erste Auflösung,
Anwenden (626) des hochgetasteten ersten Zwischenbildes auf das zweite Bildverbesserungsmodell zum Erzeugen eines zweiten Zwischenbildes bei der ersten Auflösung, und
Heruntertasten (628) des zweiten Zwischenbildes auf die zweite Auflösung zum Erzeugen eines verbesserten Bildes des sechsten Trainingsdatensatzes, das dem gegebenen Bild des fünften Trainingsdatensatzes entspricht; und
Trainieren (630) eines vierten Bildverbesserungsmodells zum Vorhersagen von Ausgabebildern des sechsten Trainingsdatensatzes, wenn entsprechende Eingabebilder aus dem fünften Trainingsdatensatz präsentiert werden.

4. Verfahren nach Anspruch 3, wobei eine Modellarchitektur des vierten Bildverbesserungsmodells die MobileNet-Architektur ist.

5. Verfahren nach Anspruch 3, wobei der fünfte Trainingsdatensatz eine Mehrzahl von niedrigqualitativen Bildern bei der zweiten Auflösung umfasst.

6. Verfahren nach einem der Ansprüche 3 bis 5, ferner umfassend:
Erzeugen eines verbesserten Ausgabebildes bei der zweiten Auflösung aus einem Zielbild bei der zweiten Auflösung durch Anwenden des Zielbildes auf das vierte Bildverbesserungsmodell.

7. Verfahren nach Anspruch 6, ferner umfassend:
Übertragen des vierten Bildverbesserungsmodells von einem Server an ein entferntes System, wobei Erzeugen des verbesserten Ausgabebildes aus dem Zielbild durch mindestens einen Prozessor des entfernten Systems durchgeführt wird.

8. Verfahren nach Anspruch 6, ferner umfassend:
Erhalten eines Quellbildes;
Bestimmen einer Position eines Gesichts innerhalb des Quellbildes; und
Extrahieren eines Abschnitts des Quellbildes, der der bestimmten Position des Gesichts innerhalb des Quellbildes entspricht, wobei das Zielbild der extrahierte Abschnitt des Quellbildes ist.

9. Verfahren nach Anspruch 8, wobei Erhalten des Quellbildes Erhalten eines Videostroms umfasst, wobei das Quellbild ein Einzelbild des Videostroms ist.

10. Verfahren nach Anspruch 9, wobei Erhalten des Videostroms, Erhalten des Quellbildes, Bestimmen der Position des Gesichts innerhalb des Quellbildes, Extrahieren des Abschnitts des Quellbildes und Erzeugen des verbesserten Ausgabebildes aus dem Zielbild durch Anwenden des Zielbildes auf das vierte Bildverbesserungsmodell durch mindestens einen Prozessor eines Smartphones durchgeführt werden.

11. Verfahren nach einem der vorhergehenden Ansprüche, wobei die erste Auflösung 1024x1024 ist und wobei die zweite Auflösung 512x512 ist.

12. Verfahren nach einem der Ansprüche 1-11, wobei synthetisches Degradieren der hochqualitativen Bilder des ersten Datensatzes mindestens eines von Hinzufügen von Gaußschem Rauschen, Hinzufügen von Kamerarauschen, Hinzufügen von Gaußscher Unschärfe, Hinzufügen von Bewegungsunschärfe, Heruntertasten und Hinzufügen von Codierungsartefakten umfasst.

13. Verfahren, umfassend:
Anwenden eines ersten Bildverbesserungsmodells zum Erzeugen eines verbesserten Ausgabebildes bei einer ersten Auflösung aus einem Zielbild bei der ersten Auflösung, wobei das erste Bildverbesserungsmodell unter Verwendung des Verfahrens nach einem der vorhergehenden Ansprüche trainiert worden ist.

14. System, umfassend einen oder mehrere Prozessoren (406) und einen Speicher (408), wobei der Speicher computerlesbare Anweisungen speichert, die, wenn sie von dem einen oder den mehreren Prozessoren ausgeführt werden, das System veranlassen, ein Verfahren nach einem der vorhergehenden Ansprüche durchzuführen.

15. Computerprogrammprodukt, umfassend computerlesbare Anweisungen, die, wenn sie von einem Computer ausgeführt werden, den Computer veranlassen, ein Verfahren nach einem der Ansprüche 1 bis 13 durchzuführen.

## Revendications

1. Procédé mis en œuvre par ordinateur comprenant :
l'obtention (510) d'un premier ensemble de données d'entraînement qui comprend une pluralité d'images de haute qualité à une première résolution ;
la génération (520), à partir du premier ensemble de données d'entraînement, d'un deuxième ensemble de données d'entraînement qui comprend une pluralité d'images dégradées à la première résolution en dégradant synthétiquement les images de haute qualité du premier ensemble de données ;
l'entraînement (530) d'un premier modèle d'amélioration d'image pour prédire des images de sortie du premier ensemble de données d'entraînement lorsqu'il est présenté avec des images d'entrée correspondantes du deuxième ensemble de données d'entraînement ;
l'application (540) d'images du premier ensemble de données d'entraînement au premier modèle d'amélioration d'image entraîné pour générer un troisième ensemble de données d'entraînement qui comprend une pluralité d'images améliorées à la première résolution ;
la génération (550), à partir du troisième ensemble de données d'entraînement, d'un quatrième ensemble de données d'entraînement qui comprend une pluralité d'images améliorées dégradées à la première résolution en dégradant synthétiquement les images améliorées du troisième ensemble de données ;
l'entraînement (560) d'un deuxième modèle d'amélioration d'image pour prédire des images de sortie du troisième ensemble de données d'entraînement lorsqu'il est présenté avec des images d'entrée correspondantes du quatrième ensemble de données d'entraînement ; et
l'entraînement (570) d'un troisième modèle d'amélioration d'image pour prédire des images de sortie du troisième ensemble de données d'entraînement à une seconde résolution lorsqu'il est présenté avec des images d'entrée correspondantes du quatrième ensemble de données d'entraînement qui ont été sous-échantillonnées à la seconde résolution, dans lequel la seconde résolution est inférieure à la première résolution.

2. Procédé selon la revendication 1, comprenant en outre :
la génération d'une image améliorée de sortie à la seconde résolution à partir d'une image cible à la seconde résolution en appliquant l'image cible au troisième modèle d'amélioration d'image pour générer une première image intermédiaire à la seconde résolution, en suréchantillonnant la première image intermédiaire à la première résolution, en appliquant la première image intermédiaire suréchantillonnée au deuxième modèle d'amélioration d'image pour générer une seconde image intermédiaire à la première résolution et en sous-échantillonnant la seconde image intermédiaire à la seconde résolution.

3. Procédé selon la revendication 1, comprenant en outre :
l'obtention (610) d'un cinquième ensemble de données d'entraînement qui comprend une pluralité d'images à la seconde résolution ;
la génération (620), à partir du cinquième ensemble de données d'entraînement, d'un sixième ensemble de données d'entraînement qui comprend une pluralité d'images améliorées à la seconde résolution par, pour une image donnée du cinquième ensemble de données d'entraînement :
la génération (622) d'une image améliorée de sortie à la seconde résolution à partir de l'image donnée du cinquième ensemble de données d'entraînement en appliquant l'image donnée au troisième modèle d'amélioration d'image pour générer une première image intermédiaire à la seconde résolution,
le suréchantillonnage (624) de la première image intermédiaire à la première résolution,
l'application (626) de la première image intermédiaire suréchantillonnée au deuxième modèle d'amélioration d'image pour générer une seconde image intermédiaire à la première résolution, et
le sous-échantillonnage (628) de la seconde image intermédiaire à la seconde résolution pour générer une image améliorée du sixième ensemble de données d'entraînement qui correspond à l'image donnée du cinquième ensemble de données d'entraînement ; et
l'entraînement (630) d'un quatrième modèle d'amélioration d'image pour prédire des images de sortie du sixième ensemble de données d'entraînement lorsqu'il est présenté avec des images d'entrée correspondantes du cinquième ensemble de données d'entraînement.

4. Procédé selon la revendication 3, dans lequel une architecture de modèle du quatrième modèle d'amélioration d'image est l'architecture MobileNet.

5. Procédé selon la revendication 3, dans lequel le cinquième ensemble de données d'entraînement comprend une pluralité d'images de faible qualité à la seconde résolution.

6. Procédé selon l'une quelconque des revendications 3 à 5, comprenant en outre :
la génération d'une image améliorée de sortie à la seconde résolution à partir d'une image cible à la seconde résolution en appliquant l'image cible au quatrième modèle d'amélioration d'image.

7. Procédé selon la revendication 6, comprenant en outre :
la transmission du quatrième modèle d'amélioration d'image d'un serveur à un système distant, dans lequel la génération de l'image améliorée de sortie à partir de l'image cible est réalisée par au moins un processeur du système distant.

8. Procédé selon la revendication 6, comprenant en outre :
l'obtention d'une image source ;
la détermination d'un emplacement d'un visage au sein de l'image source ; et
l'extraction d'une portion de l'image source correspondant à l'emplacement déterminé du visage au sein de l'image source, dans lequel l'image cible est la portion extraite de l'image source.

9. Procédé selon la revendication 8, dans lequel l'obtention de l'image source comprend l'obtention d'un flux vidéo, dans lequel l'image source est une trame du flux vidéo.

10. Procédé selon la revendication 9, dans lequel l'obtention du flux vidéo, l'obtention de l'image source, la détermination de l'emplacement du visage au sein de l'image source, l'extraction de la portion de l'image source et la génération de l'image améliorée de sortie à partir de l'image cible en appliquant l'image cible au quatrième modèle d'amélioration d'image sont réalisées par au moins un processeur d'un smartphone.

11. Procédé selon une quelconque revendication précédente, dans lequel la première résolution est de 1024x1024 et dans lequel la seconde résolution est de 512x512.

12. Procédé selon l'une quelconque des revendications 1 à 11, dans lequel la dégradation synthétique des images de haute qualité du premier ensemble de données comprend au moins l'un de l'ajout de bruit gaussien, de l'ajout de bruit de caméra, de l'ajout de flou gaussien, de l'ajout de flou de mouvement, du sous-échantillonnage et de l'ajout d'artefacts d'encodage.

13. Procédé comprenant :
l'application d'un premier modèle d'amélioration d'image pour générer une image améliorée de sortie à une première résolution à partir d'une image cible à la première résolution, dans lequel le premier modèle d'amélioration d'image a été entraîné à l'aide du procédé selon une quelconque revendication précédente.

14. Système comprenant un ou plusieurs processeurs (406) et une mémoire (408), la mémoire stockant des instructions lisibles par ordinateur qui, lorsqu'elles sont exécutées par les un ou plusieurs processeurs, amènent le système à réaliser un procédé selon une quelconque revendication précédente.

15. Produit de programme informatique comprenant des instructions lisibles par ordinateur qui, lorsqu'elles sont exécutées par un ordinateur, amènent l'ordinateur à réaliser un procédé selon l'une quelconque des revendications 1 à 13.
